# EUROPÄISCHE PATENTSCHRIFT

(11) **EP 3 078 545 B1**
(45) Veröffentlichungstag und Bekanntmachung des Hinweises auf die Patenterteilung: **20.03.2019**
(21) Anmeldenummer: 16163395.3
(22) Anmeldetag: 31.03.2016
(51) Int. Cl.: B60P 7/08, A44B 11/12

(54) **GURTSPANNER**
BELT TENSIONER
TENDEUR DE SANGLE

(30) Priorität: 02.04.2015 DE 202015101673 U
(43) Veröffentlichungstag der Anmeldung: 12.10.2016
(73) Patentinhaber: Franz Miederhoff oHG, 59846 Sundern (DE)
(72) Erfinder: PAPENHEIM, Josef, 59846 Sunderm (DE)
(74) Vertreter: Patentanwälte Dörner & Kötter PartG mbB

(56) Entgegenhaltungen:
- WO-A1-84/00712
- DE-U1-202014 103 118
- FR-A1- 2 182 703
- FR-A1- 2 832 366

## Beschreibung

Die Erfindung betrifft einen Gurtspanner, umfassend ein Unterteil mit einem durch zwei Seitenwangen eingefassten Bodenteil und umfassend einen schwenkbar an den Seitenwangen des Unterteils angelenkten, Seitenwangen aufweisenden Spannhebel mit einem Umlenksteg zum Herumführen eines zu spannenden Gurtes zur Ausbildung einer Gurtschlaufe, wobei der Umlenksteg des Spannhebels bei geschlossenem Gurtspanner gegenüber der Ebene des Spannhebels in Richtung zur Schwenkachse des Spannhebels geneigt ist.

Derartige Gurtspanner werden beispielsweise zum Spannen von Planen von Nutzfahrzeugaufbauten, wie etwa von Lastkraftwagen, von Sattelaufliegern oder von Eisenbahnwaggons eingesetzt. Bekannt ist ein solcher Gurtspanner aus der EP 0 906 732 A1. Der in diesem Dokument beschriebene Gurtspanner verfügt über ein zwei Seitenwangen aufweisendes Unterteil, das zumeist mittels Nieten mit geringem Abstand zum unteren Rand einer Plane daran angeschlossen ist. Schwenkbar an das Unterteil angelenkt ist ein Spannhebel. Der Spannhebel verfügt über abgekantete Seitenwangen und einen die Seitenwangen verbindenden Gurtsteg. Der Spannhebel ist mittels eines Gelenkbolzens an die beiden Seitenwangen des Unterteils angeschlossen. Auf dem Gelenkbolzen sitzt eine Hülse zur Gurtumlenkung. Zum Anschließen der zu spannenden Plane an ein fahrzeugseitiges Widerlager wird ein Gurt mit einem Haken zum Hintergreifen eines Widerlagers am Aufbau des Chassis an seinem einen Ende verwendet.

Derartige Gurtspanner sind mitunter auch als Übertotpunktspanner ausgeführt. Dies bedeutet, dass der Spannhebel in seiner Geschlossen-Stellung bei gespanntem Gurt durch die Gurtspannung in dieser Stellung verbleibt. Um den Spannhebel in diese Stellung zu bringen, muss der Totpunkt überwunden werden. Zusätzlich können derartige Gurtspanner auch mit einer Verriegelungseinrichtung zum Verriegeln des Spannhebels an dem Unterteil ausgerüstet sein. Gurtspanner mit einer Verriegelungseinrichtung zum Verriegeln des Spannhebels an dem Unterteil wird man vor allem dann einsetzen, wenn der zu spannende Gurt höheren, vor allem dynamischen Wechselbelastungen ausgesetzt ist.

Derartige Gurtspanner, an der Außenseite der Plane angeordnet, bestimmen zusammen mit dem darin eingefädelten Gurt die Aufbauhöhe auf der Plane. Naturgemäß ist man bei der Konzeption derartiger Gurtspanner bestrebt, die Aufbauhöhe möglichst gering zu halten. Die Aufbauhöhe eines herkömmlichen Gurtspanners zum Spannen der Seitenplane eines Nutzfahrzeugaufbaus beträgt derzeitig zumindest etwa 24 mm. Berücksichtigt ist zum Erzielen dieser bereits als gering angesehenen Aufbauhöhe, dass der für die notwendige Übertotpunkt-Stellung des Spannhebels in seiner Geschlossen-Stellung notwendige Schwenkbetrag über den Totpunkt hinaus vorhanden ist und auch die in die Seitenwangen des Spannhebels sowie des Unterteils fluchtend miteinander verlaufenden Durchführungsöffnungen, etwa zum Durchziehen eines Zollverschussseils eine hinreichende Größe aufweisen. Obwohl derzeitig am Markt befindliche Gurtspanner der in Rede stehenden Art bereits eine Aufbauhöhe aufweisen, die als auf ein Minimum reduziert angesehen wird, wird gefordert, dass der Aufbau auf einer Seitenplane eines Nutzfahrzeugaufbaus nicht mehr als 20 mm betragen darf. Dieses bedeutet, dass um dieser Forderung zu genügen, ein Gurtspanner eine Aufbauhöhe von 20 mm nicht überschreiten darf.

Zur Reduzierung der Aufbauhöhe eines solchen Gurtspanners wird in der DE 20 2014 013 118 U1 vorgeschlagen, in das Bodenteil des Unterteils Seitenwangenausnehmungen einzubringen, in die in der Geschlossen-Stellung des Spannhebels jeweils ein Abschnitt einer Seitenwange des Spannhebels eintaucht. Mit diesem Konzept möchte man die Aufbauhöhe des Gurtspanners reduzieren und gleichzeitig sicherstellen, dass in den Seitenwangen des Spannhebels und denjenigen des Unterteils miteinander fluchtende Durchführungsöffnungen eine hinreichende Öffnungsweite aufweisen, um Sicherungsseile, wie etwa Zollverschlussseile, hindurchführen zu können.
Aus der DE 20 2014 102 278 U1 ist ein weiterer Gurtspanner bekannt, mit dem durch Vorsehen eines mit seinem freien Ende in den Raum zwischen den beiden Seitenwangen des Unterteils abgekanteter Steg als Gurtumlenkung zu einer besonders effektiven Gurtsicherung führt. Eine solche Verlagerung der Gurtumlenkung des Unterteils ist jedoch bei einer Konzeption des Gurtspanners als Übertotpunktspanner nicht mit der Forderung vereinbar, die Aufbauhöhe möglichst gering zu halten.
Aus der FR 2 182 703 A1 ist ein Gurtspanner der eingangs genannten Art bekannt. Dieser hat allerdings den Nachteil, dass in der Geschlossen-Stellung des Gurtspanners ein über den Umlenksteg des Spannhebels geführter Gurt die durch die Höhe der Seitenwangen des Unterteils bereitgestellte Höhe überschreitet und somit über die Seitenwangen hinausragt.

Aus der WO 84/ 00712 A1 ist ferner ein Gurtspanner gemäß dem Oberbegriff des Anspruchs 1 bekannt.

Ausgehend von diesem diskutierten Stand der Technik liegt der Erfindung daher die Aufgabe zugrunde, einen Gurtspanner der eingangs genannten Art dergestalt weiterzubilden, dass dessen Höhe in der Geschlossen-Stellung mit eingefädeltem Gurt gegenüber herkömmlichen Gurtspannern nicht nur reduziert und insbesondere mit einer Höhe von 20 mm oder sogar weniger ausgebildet werden kann, sondern der zur Erzielung einer auch höheren Kräften standhaltenden Gurtsicherung selbst mit einer Gurtumlenkung im Unterteil ausgestattet werden kann, wie diese aus DE 20 2014 102 278 U1 bekannt geworden ist.

Gelöst wird diese Aufgabe erfindungsgemäß durch einen eingangs genannten, gattungsgemäßen Gurtspanner, bei dem der Umlenksteg des Spannhebels bei geschlossenem Gurtspanner gegenüber der Ebene des Spannhebels in Richtung zur Schwenkachse des Spannhebels geneigt ist und der sich dadurch auszeichnet, dass der gegenüber der äußeren Ebene des Spannhebels geneigte Umlenksteg durch eine Verkröpfung an die Seitenwangen des Spannhebels angeformt ist.

Von Besonderheit ist bei diesem Gurtspanner die Ausrichtung des Umlenksteges des Spannhebels. Während der Umlenksteg des Spannhebels bei vorbekannten Gurtspannern sich in der Ebene der Handhabungslasche und damit in der Ebene des Spannhebels befindet, ist der Umlenksteg des Spannhebels bei dem beanspruchten Gurtspanner gegenüber dieser Ebene in Richtung zur Schwenkachse hin geneigt. Erreicht wird hierdurch zweierlei: Zum einen ist der zur Schwenkachse weisende Abschluss des Umlenksteges gegenüber herkömmlichen Anordnungen in Richtung des Raumes zwischen den Seitenwangen des Spannhebels gegenüber der Ebene des äußeren Abschlusses des Spannhebels versetzt. Durch diese Maßnahme ist ein über die zur Schwenkachse des Gurtspanners weisende Kante des Spannhebels und die Gurtumlenkung des Unterteils geführter Gurt gegenüber der den äußeren Abschluss des Spannhebels bildenden Ebene in Richtung zum Bodenteil versetzt. Diesen Versatz und damit die Neigung des Umlenksteges des Spannhebels wird man derart ausbilden, dass die Schwenkachse des Spannhebels an der vom Bodenteil wegweisenden Seite des Gurtes angeordnet ist. Überraschenderweise lässt sich allein durch diese Maßnahme eine sichere Übertotpunkt-Stellung des Spannhebels in seiner Geschlossen-Stellung einstellen. Aufgrund der geneigten Auslegung des Umlenksteges des Spannhebels in der vorbeschriebenen Art und Weise und der dadurch geänderten Gurtführung in Bezug auf die Schwenkachse des Spannhebels kann wiederum ein aus der Ebene des Bodenteils abgekanteter Umlenksteg, sollte ein solcher vorgesehen sein, an dessen freien Ende die Gurtschlaufe herumgeführt ist, eine für eine Steigerung der Hemmkraft hinreichende Höhe und/oder Neigung aufweisen, wobei dennoch eine sichere Übertotpunkt-Stellung des geschlossenen Spannhebels gewährleistet ist.

Zum anderen wird durch diese Maßnahme der Winkel, um den ein gespannter Gurt an der zur Schwenkachse des Spannhebels weisenden Kante umgelenkt wird, gegenüber herkömmlichen Anordnungen reduziert. Die Folge ist, dass hierdurch die bei gespanntem Gurt auf den Umlenksteg einwirkenden Querkräfte nicht unerheblich reduziert sind. Insofern wird es durch die vorbeschriebene Maßnahme grundsätzlich als nicht erforderlich angesehen, dass der Umlenksteg des Spannhebels über zusätzliche Verstärkungs- bzw. Versteifungssicken verfügt, die herkömmlich zur Vermeidung einer Deformation des Umlenksteges durch einen gespannten Gurt oftmals vorgesehen sind. Derartige Verstärkungssicken sind aus dem Stand der Technik bekannt. Da diese aus Sicht des Gurtspanners nach außen gerichtet sind, tragen diese zur Höhe des Gurtspanners in seiner Geschlossen-Stellung bei. Somit trägt die verbesserte Krafteinleitung auch diesbezüglich zu einer Reduktion der Aufbauhöhe bei.

Die vorbeschriebene geneigte Anordnung des Umlenksteges des Spannhebels geht grundsätzlich davon aus, dass der zum zugfreien Ende des Spannhebels weisende Abschluss desselben nicht über die übrige äußere Ebene des Spannhebels nach außen hin hervorragt.

Eine weitere Reduzierung in der Gesamtaufbauhöhe des Gurtspanners mit eingefädeltem Gurt in seiner Geschlossen-Stellung lässt sich erreichen, wenn die Ebene des äußeren Abschlusses des Spannhebels in der Geschlossen-Stellung des Gurtspanners um einige Winkelgrade gegenüber der Ebene des Bodenteils geneigt ist, und zwar gegensinnig zur Neigung des Umlenksteges des Spannhebels. Insofern nimmt in der Geschlossen-Stellung eines solchen Gurtspanners der Abstand zwischen dem Bodenteil und der Ebene des äußeren Abschlusses des Spannhebels in von der Schwenkachse des Spannhebels wegweisender Richtung ab. Aufgrund dieser Neigung des Spannhebels in seiner Geschlossen-Stellung gegenüber dem Unterteil ist der zum freien Ende des Spannhebels weisende Abschluss des Umlenksteges, um den der Gurt zur Ausbildung einer Gurtschlaufe geführt ist, etwas näher an das Bodenteil des Unterteils herangeführt. Typischerweise befindet sich dann der Umlenksteg des Spannhebels zwischen den Seitenwangen des Unterteils. Bevorzugt wird man die vorbeschriebene Neigung des Spannhebels gegenüber dem Bodenteil des Unterteils in einer Art und Weise auslegen, dass ein über den Umlenksteg des Spannhebels geführter Gurt in der Geschlossen-Stellung des Gurtspanners die durch die Höhe der Seitenwangen des Unterteils bereitgestellte Höhe nicht überschreitet.

Die Neigung des Umlenksteges des Spannhebels gegenüber seiner Ebene, die typischerweise die Ebene des äußeren Abschlusses des Spannhebels ist, wird man unter den vorgenannten Kriterien einrichten. Gemäß einem Ausführungsbeispiel ist vorgesehen, dass die Neigung des Umlenksteges dem Neigungswinkel entspricht, mit dem der äußere Abschluss der Schwenkachse gegenüber der Ebene des Bodenteils geneigt ist. Bei einer solchen Ausgestaltung ist der Umlenksteg des Spannhebels in der Geschlossen-Stellung des Gurtspanners parallel oder etwa parallel zur Ebene des Bodenteils ausgerichtet. Der Umlenksteg des Spannhebels kann auch mit einem größeren Neigungswinkel als vorgeschrieben geneigt sein, wobei die Neigung des Umlenksteges zweckmäßigerweise nur so groß ist, dass an dem zur Schwenkachse weisenden Abschluss desselben der gespannte Gurtabschnitt noch anliegt.

Der Spannhebel eines solchen Gurtspanners ist typischerweise ein Stanzbiegeteil, hergestellt aus einem nicht rostenden Stahl. Die geneigte Ausrichtung des Umlenksteges des Spannhebels lässt sich beispielsweise mittels eines Press- beziehungsweise Prägevorganges einrichten. Eine solche Verprägung erfolgt in Bezug auf die Ebene der Außenseite des Spannhebels in dem für die Neigung des Umlenksteges vorgesehenen Winkel. Somit ist typischerweise der gegenüber der äußeren Ebene des Spannhebels geneigte Umlenksteg über die durch den Prägevorgang ausgebildete Verkröpfung an die Seitenwangen des Spannhebels angeformt. Die Höhe der Verkröpfung nimmt sukzessive in Richtung des Umlenksteges zur Schwenkachse des Spannhebels hin zu. Das Maß der Verkröpfung wird man aufgrund der damit einhergehenden Materialausdünnung nicht zu groß wählen.

Zur Verbesserung einer Krafteinleitung von dem Umlenksteg in die Seitenwangen des Spannhebels ist in einem Ausführungsbeispiel vorgesehen, dass der Spannhebel an seinem zur Schwenkachse weisenden Ende des Umlenksteges im Bereich des jeweiligen Übergangs vom Umlenksteg in die benachbarte Seitenwange einen Verstärkungsfortsatz aufweist. Diese Verstärkungsfortsätze haben eine quasi gurtparallele Erstreckung. Diese müssen nicht besonders lang ausgeführt sein. Verstärkungsfortsätze von wenigen Millimetern Längserstreckung verbessern bereits die Krafteinleitung in die Seitenwangen des Spannhebels.

Mit den übrigen Anforderungen an einen Spanner zum Spannen von Gurten von Seitenplanen von Nutzfahrzeugaufbauten können Aufbauhöhen von 20 mm und weniger, sogar von etwa 19 mm und weniger realisiert werden. Somit vereint ein solcher Gurtspanner die Vorteile eines solchen mit besonders geringer Aufbauhöhe mit den Vorteilen eines Übertotpunkt-Spanners, also eines Gurtspanners, der keine zusätzliche Verriegelung benötigt. Zugleich kann eine besonders effektive Gurthemmung durch Vorsehen eines vom Bodenteil in den Raum zwischen den Seitenwangen des Unterteils abgekanteten Gurtumlenkungssteges herbeigeführt werden. In einer solchen Konzeption können die geforderten Spannkräfte von 1.000 Nm ohne Weiteres übertroffen werden. Versuche haben gezeigt, dass mit einem solchen Gurtspanner Spannkräfte sogar von 1.300 Nm ausgeübt werden können.

Auch wenn ein solcher Gurtspanner als Übertotpunkt-Spanner ausgelegt werden kann, um eine sichere Verriegelung auch bei hohen anliegenden Zuglasten zu gewährleisten, kann es für manche Anwendungen sinnvoll sein, einen solchen Gurtspanner mit einer Verriegelungseinrichtung zum Verriegeln des Spannhebels in seiner Geschlossen-Stellung am Unterteil auszustatten.

Zur weiteren Reduzierung der Aufbauhöhe ist gemäß einem Ausführungsbeispiel, bei dem die Seitenwangen des Bodenteils und des Spannhebels jeweils miteinander fluchtende Durchführungsöffnungen zum Durchziehen eines Sicherungsseils, wie beispielsweise eines Zollverschlussseils, aufweisen, vorgesehen, dass in das Bodenteil des Unterteils Seitenwangenausnehmungen eingebracht sind. In der Geschlossen-Stellung des Spannhebels taucht in diese Ausnehmungen jeweils ein Abschnitt einer Seitenwange des Spannhebels ein. Somit wird bei diesem Gurtspanner zum Reduzieren seiner Aufbauhöhe die Materialstärke des Bodenteils zur Verlängerung des Schwenkbetrages des Spannhebels genutzt, wodurch auch der Neigungswinkel der Ebene des Spannhebels in seiner Geschlossen-Stellung gegenüber der Ebene des Bodenteils in der Geschlossen-Stellung des Gurtspanners entsprechend vergrößert werden kann. Bei einer Materialstärke des Bodenteils von 2 mm wird der mögliche Schwenkweg des Spannhebels entsprechend verlängert. Zudem erlaubt diese Maßnahme, dass der zum Bodenteil weisende Abschluss der Seitenwangen des Spannhebels, durch den die Durchführungsöffnung in dieser Richtung begrenzt wird, dass der zum Bodenteil weisende Abschluss der Durchführungsöffnung näher an die Oberfläche des Bodenteils herangeführt werden kann. Der untere Abschluss der Durchführungsdurchbrechung kann bis auf die Ebene der Oberseite des Bodenteils gebracht werden. Dann weist dieser die Durchführungsöffnung begrenzende Abschnitt der Seitenwange des Unterteils immer noch eine Höhe entsprechend der Materialstärke des Bodenteils, also beispielsweise von 2 mm auf. Die Seitenwangenausnehmungen in dem Bodenteil des Unterteils sind typischerweise als Durchbrechungen nach Art eines Langloches ausgeführt. Bei dem zuvor beschriebenen Ausführungsbeispiel ist jedem in das Bodenteil eintauchenden Seitenwangenabschnitt des Spannhebels eine Seitenwangenausnehmung zugeordnet. Durchaus möglich ist auch, eine gemeinsame Seitenwangenausnehmung für beide in das Bodenteil eintauchenden Seitenwangenabschnitte des Spannhebels vorzusehen. Eine solche Durchbrechung erstreckt sich über die Breite des Bodenteils zwischen den beiden Seitenwangen.

Nachfolgend ist die Erfindung anhand eines Ausführungsbeispiels unter Bezugnahme auf die beigefügten Figuren beschrieben. Es zeigen:
- Fig. 1: eine perspektivische Ansicht eines erfindungsgemäßen Gurtspanners in Geschlossen-Stellung,
- Fig. 2: eine Draufsicht auf den Gurtspanner der Figur 1 in einer Halbdarstellung,
- Fig. 3: einen Teillängsschnitt durch den Gurtspanner der Figur 1 und
- Fig. 4: die Längsschnittdarstellung der Figur 3 des Gurtspanners der Figur 1 mit einem darin eingefädelten Gurt.

Ein Gurtspanner 1 dient zum Spannen eines Gurtes, der seinerseits beispielsweise an die Seitenplane eines Nutzfahrzeugaufbaus angeschlossen sein kann. Mit einer Vielzahl derartiger Gurtspanner wird typischerweise die Seitenplane gegenüber der Bodengruppe des Nutzfahrzeugaufbaus verspannt.

Der Gurtspanner 1 verfügt über ein zwei Seitenwangen 2, 2.1 aufweisendes Unterteil 3. Die Seitenwangen 2, 2.1 fassen zusammen mit einem Bodenteil 4 eine Gurtaufnahme ein. An den Seitenwangen 2, 2.1 ist ein Spannhebel 5 schwenkbar angelenkt. Bei dem dargestellten Ausführungsbeispiel ist die gelenkige Anordnung des Spannhebels 5 gegenüber dem Unterteil 4 durch entsprechende Bohrungen in den Seitenwangen 2, 2.1 des Unterteils 3 durchgreifende Nietdurchzüge 6, 6.1 des Spannhebels 5 ausgeführt.

Auch der Spannhebel 5 verfügt über Seitenwangen 7, 7.1. Verbunden sind die Seitenwangen 7, 7.1 durch eine Handhabungslasche 8 sowie durch einen Umlenksteg 9. Der Umlenksteg 9 ist von der Handhabungslasche 8 durch eine als Gurtdurchführung dienende Öffnung 10 beabstandet. Die bereits vorbeschriebenen Nietdurchzüge 6, 6.1 sitzen an Fortsätzen der Seitenwangen 7, 7.1 des Spannhebels 5 an der von der Handhabungslasche 8 wegweisenden Seite des Umlenksteges 9.

Zum Bewirken einer besonders effektiven Gurthemmung ist von dem Bodenteil 4 des Unterteils 3 ein einer Gurtumlenkung dienender Steg 11 in den Raum zwischen die beiden Seitenwangen 2, 2.1 hinein abgekantet. Bei dem dargestellten Ausführungsbeispiel ist die Abkantung mit einem Winkel von etwa 90 Grad ausgeführt worden. Selbstverständlich kann dieser Steg auch nur zu einem geringeren Maß abgekantet sein, etwa wie in den Figuren der DE 20 2014 102 278 U1 gezeigt. Die gewünschte besonders wirkungsvolle Gurthemmung erfolgt an der von den Nietdurchzügen 6, 6.1 und somit der Schwenkachse des Spannhebels 5 wegweisenden Kante 12 des Steges 11. In das Bodenteil 4 ist in derselben Richtung hinter dem Steg 11 eine Durchbrechung 13 als Gurtdurchführung eingebracht.

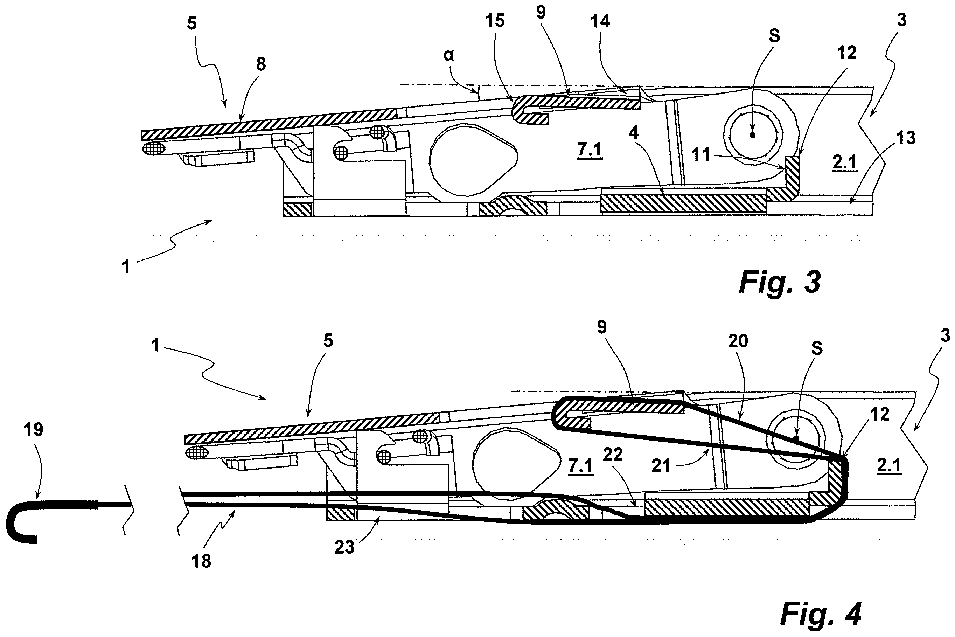

Der Umlenksteg 9 des Spannhebels 5 ist bei dem Gurtspanner 1 gegenüber der durch die äußere Oberfläche der Handhabungslasche 8 gebildeten Ebene des Spannhebels 5 geneigt, und zwar in Richtung zur Schwenkachse des Spannhebels 5 gegenüber dem Unterteil 3. Diese geneigte Ausrichtung der Ebene des Umlenksteges 9 ist bei dem dargestellten Ausführungsbeispiel durch eine geneigt ausgeführte Verkröpfung 14 bereitgestellt. Der Versatz der Verkröpfung 14 nimmt aufgrund der vorbeschriebenen Neigung des Umlenksteges 9 in Richtung zu dem schwenkachsenseitigen Abschluss des Umlenksteges 9 zu. Der zu der Handhabungslasche 8 weisende Abschluss 15 des Umlenksteges 9 ist durch eine Materialdopplung (siehe auch Figur 3) gerundet ausgeführt.

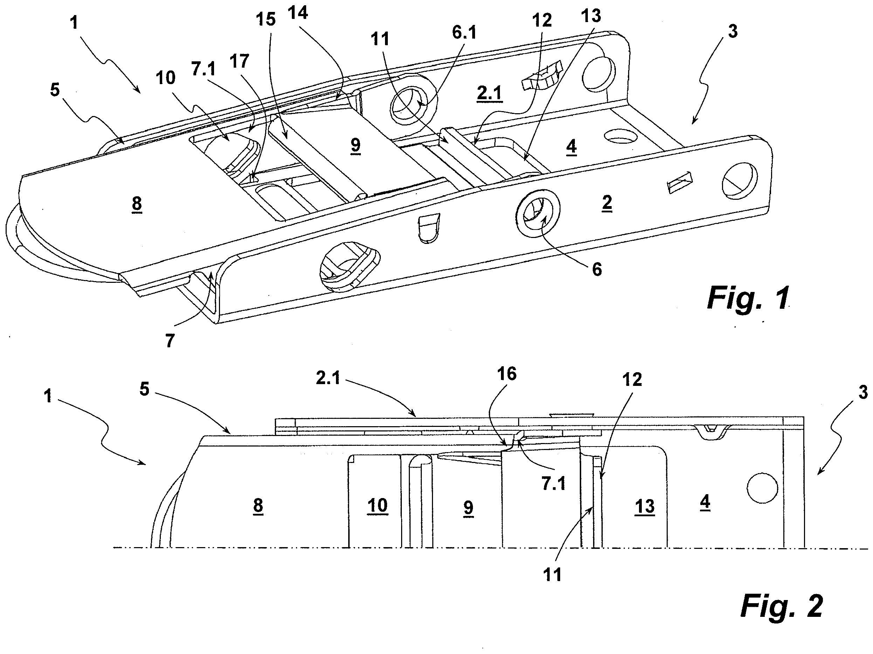

Figur 2 zeigt ein bei dem Gurtspanner der übrigen Figuren zwar vorhandenes, jedoch darin nicht dargestelltes Detail des Gurtspanners 1. Dieses betrifft den Übergang des Umlenksteges 9 des Spannhebels 5 in die angrenzenden Seitenwangen 7, 7.1. An diesen zur Schwenkachse des Spannhebels weisenden Übergängen sind Verstärkungsfortsätze 16 vorgesehen, durch die eine Krafteinleitung von dem Umlenksteg 9 in die jeweils angrenzende Seitenwange 7 bzw. 7.1 verbessert ist.

Die vorbeschriebene Konzeption des Gurtspanners 1 ist besonders gut in den Schnittdarstellungen des Gurtspanners in den Figuren 3 und 4 zu erkennen. Strichpunktiert ist in der Figur 3 der obere Abschluss der Seitenwange 2.1 des Unterteils 2 in Richtung zu dem freien Ende des Spannhebels 5 angedeutet. Die geneigte Anordnung der Ebene des Spannhebels 5 in der Geschlossen-Stellung des Gurtspanners ist in Figur 3 zu erkennen. Der Neigungswinkel ist in dieser Figur mit dem Bezugszeichen α kenntlich gemacht, und zwar gegenüber einer Ausrichtung des Spannhebels 5, wenn dessen äußerer Abschluss parallel zur Ebene des Bodenteils 4 des Unterteils 3 verlaufen würde. Die strichpunktiert in Figur 3 dargestellte Flucht des oberen Abschlusses der Seitenwange 2.1 zeigt zugleich, dass der Spannhebel 5 in seiner Geschlossen-Stellung nicht über die Höhe der Seitenwange 2.1 des Unterteils 3 hervorsteht. Dieses gilt vor allem für den Umlenksteg 9, der mit seiner gesamten, vom Unterteil 3 wegweisenden, zwischen den Verkröpfungen 14 befindlichen Erstreckung von der strichpunktiert darstellten Flucht des oberen Abschlusses der Seitenwange 2.1 in Richtung zum Unterteil 3 beabstandet ist. Dieses macht bereits deutlich, dass ein über den Umlenksteg 9 geführter Gurt nicht über die Höhe der Seitenwangen 2, 2.1 hervorsteht. Bei dem dargestellten Ausführungsbeispiel verläuft die Ebene des Umlenksteges 9 in seinem Gurtführungsbereich parallel zur Ebene des Bodenteils 4 des Unterteils 3. Um eine Beschädigung eines um den Umlenksteg 9 geführten Gurtes zum Ausbilden einer Gurtschlaufe durch die einwirkende Zugkraft zu vermeiden, ist der zum freien Ende des Spannhebels 5 weisende Abschluss 15 durch eine Materialdopplung gerundet ausgeführt.

Bei dem in den Figuren dargestellten Ausführungsbeispiel beträgt der Neigungswinkel a, mit dem der Spannhebel 5 gegenüber dem Bodenteil 4 des Unterteils 3 geneigt ist, etwa 5 Grad. Erreicht wird diese Neigung auch dadurch, dass die Seitenwangen 7, 7.1 des Spannhebels 5 in Seitenwangenausnehmungen 17 des Bodenteils 4 des Unterteils 3 eingreifen (siehe Figur 1). In Figur 1 ist eine solche Seitenwangenausnehmung bezüglich der Seitenwange 7.1 erkennbar und mit dem Bezugszeichen 17 kenntlich gemacht. Durch diese Seitenwangenausnehmungen 17 kann die Materialstärke des Bodenteils bezüglich des Verschwenkbetrages des Spannhebels genutzt werden. Die Darstellung in Figur 1 macht zudem deutlich, dass aufgrund dieser Ausgestaltung der Gurtspanner 1 ebenfalls miteinander fluchtende Durchführungsöffnungen in den Seitenwangen 2, 2.1, 7, 7.1 aufweist, um beispielsweise ein Zollverschlussseil hindurchführen zu können.

In Figur 3 ist die Schwenkachse S des Spannhebels 5 gegenüber dem Unterteil 3 mit dem Bezugszeichen S eingetragen.

Figur 4 zeigt die Darstellung des Gurtspanners 1 der Figur 3 mit einem darin eingefädelten Gurt 18, an dessen einem Ende ein Haken 19 angebracht ist. Der Haken 19 dient zum Hintergreifen eines an einem Nutzfahrzeugaufbau befindlichen Widerhakens, typischerweise unterhalb der Ladefläche. Zum Spannen einer solchen Seitenplane ist das Unterteil 3 des Gurtspanners 1 an selbiger befestigt. Zur Ausbildung einer Gurtschlaufe ist der Gurt 18 um den Umlenksteg 9 des Spannhebels 5 herum geführt. Die beiden Gurtabschnitte 20, 21, wobei an dem Ende des Gurtabschnittes 20 der Haken 19 angeordnet ist, sind gemeinsam über die Kante 12 des Steges 11 geführt, durchgreifen die Durchbrechung 13 im Unterteil 3 und werden anschließend getrennt voneinander weitergeführt. Der Gurtabschnitt 21, mit dessen freiem und in der Figur 4 nicht dargestellten Ende die Länge des zu spannenden Gurtabschnittes eingerichtet wird, wird durch eine weitere Durchbrechung 22 in den Raum zwischen den Seitenwangen 2, 2.1 des Unterteils 3 eingeführt, während der zu spannende Gurtabschnitt 20 durch eine weitere Durchbrechung 23 zwischen die Endabschnitte der Seitenwangen, 2, 2.1 geführt ist.

Von Besonderheit bei der Auslegung des Gurtspanners 1 ist, dass durch die beschriebene Ausrichtung des Umlenksteges 9 des Spannhebels 5 in Bezug auf die Ebene des Spannhebels 5 die Schwenkachse S des Spannhebels 5 an der von dem Bodenteil 4 wegweisenden Seite des zu spannenden Gurtabschnittes 20 liegt (siehe Figur 4). Dieses ist gewünscht, damit sich der Spannhebel 5 in einer sicheren Übertotpunkt-Stellung, wenn geschlossen, befindet. Bei herkömmlichen Gurtspannern würde der über den Umlenksteg 9 geführte Gurt über die Aufbauhöhe der Seitenwange 2.1 hinausragen und somit die Aufbauhöhe des Gurtspanners insgesamt erhöhen und in der in den Figuren gezeigten Geschlossen-Stellung des Gurtspanners 1 wäre keine Übertotpunkt-Stellung des Spannhebels erreicht. Umgekehrt macht die Darstellung des in den Gurtspanner 1 eingefädelten Gurtes 18 deutlich, dass die Höhe des Umlenksteges 11 des Unterteils 3 relativ weit in Richtung zu dem oberen Abschluss der Seitenwange 2, 2.1 ausgelegt werden kann, um eine besonders effektive Gurthemmung durch Zugbelastung des an den Haken 19 angeschlossenen Gurtabschnittes 20 an der Kante 12 des Umlenksteges 11 zu erzielen.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten, die Erfindung umzusetzen.

### Bezugszeichenliste

- 1: Gurtspanner
- 2, 2.1: Seitenwange
- 3: Unterteil
- 4: Bodenteil
- 5: Spannhebel
- 6, 6.1: Nietdurchzug
- 7, 7.1: Seitenwange
- 8: Handhabungslasche
- 9: Umlenksteg
- 10: Öffnung
- 11: Steg
- 12: Kante
- 13: Durchbrechung
- 14: Verkröpfung
- 15: Abschluss
- 16: Verstärkungsfortsatz
- 17: Seitenwangenausnehmung
- 18: Gurt
- 19: Haken
- 20: Gurtabschnitt
- 21: Gurtabschnitt
- 22: Durchbrechung
- 23: Durchbrechung
- S: Schwenkachse
- α: Neigungswinkel

## Patentansprüche

1. Gurtspanner, umfassend ein Unterteil (3) mit einem durch zwei Seitenwangen (2, 2.1) eingefassten Bodenteil (4) und umfassend einen schwenkbar an den Seitenwangen (2, 2.1) des Unterteils (3) angelenkten, Seitenwangen (7, 7.1) aufweisenden Spannhebel (5) mit einem Umlenksteg (9) zum Herumführen eines zu spannenden Gurtes (18) zur Ausbildung einer Gurtschlaufe, wobei der Umlenksteg (9) des Spannhebels (5) bei geschlossenem Gurtspanner (1) gegenüber der Ebene des Spannhebels (5) in Richtung zur Schwenkachse (S) des Spannhebels (5) geneigt ist, **dadurch gekennzeichnet, dass** der gegenüber der äußeren Ebene des Spannhebels (5) geneigte Umlenksteg (9) durch eine Verkröpfung (14) an die Seitenwangen (7, 7.1) des Spannhebels (5) angeformt ist.

2. Gurtspanner nach Anspruch 1, **dadurch gekennzeichnet, dass** sich der Spannhebel (5) in seiner Geschlossen-Stellung bei gespanntem Gurt (18) in einer Übertotpunkt-Stellung befindet.

3. Gurtspanner nach Anspruch 1 oder 2, **dadurch gekennzeichnet, dass** in der Geschlossen-Stellung des Gurtspanners (1) die den äußeren Abschluss des Spannhebels (5) bildende Ebene dergestalt winkelig zur Ebene des Bodenteils (4) angeordnet ist, dass der Abstand der beiden Ebenen in von der Schwenkachse (S) des Spannhebels (5) wegweisender Richtung abnimmt.

4. Gurtspanner nach Anspruch 3, **dadurch gekennzeichnet, dass** in der Geschlossen-Stellung des Gurtspanners (1) der Umlenksteg (9) des Spannhebels (5) parallel oder etwa parallel zur Ebene des Bodenteils (4) verläuft.

5. Gurtspanner nach einem der Ansprüche 1 bis 4, **dadurch gekennzeichnet, dass** das Unterteil (3) eine Gurtumlenkung aufweist und dass bei einem über die zur Schwenkachse (S) des Spannhebels (5) weisende obere Kante des Umlenksteges (9) und einen oberen Abschluss der Gurtumlenkung des Unterteils (3) geführter Gurt (18) die Schwenkachse (S) des Spannhebels (5) an der vom Bodenteil (4) wegweisenden Seite des Gurtes (18) angeordnet ist.

6. Gurtspanner nach Anspruch 5, **dadurch gekennzeichnet, dass** der obere Abschluss der Gurtumlenkung des Unterteils (3) Teil des freien Endes eines aus der Ebene des Bodenteils (4) zwischen die Seitenwangen (2, 2.1) hin abgekanteten Umlenksteges (11) ist.

7. Gurtspanner nach einem der Ansprüche 5 oder 6, **dadurch gekennzeichnet, dass** die Gurtumlenkung des Unterteils (3) und der Umlenksteg (9) des Spannhebels (5) an unterschiedlichen Seiten der Schwenkachse (S) des Spannhebels (5) in Bezug auf die Längserstreckung des Gurtspanners (1) angeordnet sind.

8. Gurtspanner nach einem der Ansprüche 1 bis 7, **dadurch gekennzeichnet, dass** der Umlenksteg (9) des Spannhebels (5) über seine gesamte Erstreckung in Längsrichtung des Gurtspanners (1) an die Seitenwangen (7, 7.1) des Spannhebels (5) angeformt ist.

9. Gurtspanner nach Anspruch 8, **dadurch gekennzeichnet, dass** der Spannhebel (5) an dem zur Schwenkachse (S) weisenden Ende seines Umlenkstegs (9) im Bereich des jeweiligen Übergangs von Umlenksteg (9) in die benachbarte Seitenwange (7,7.1) Verstärkungsfortsätze (16) aufweist.

10. Gurtspanner nach einem der Ansprüche 1 bis 9, **dadurch gekennzeichnet, dass** die Höhe des Gurtspanners (1) in seiner geschlossenen Stellung weniger als 20 mm beträgt, insbesondere etwa 19 mm oder weniger.

11. Gurtspanner nach einem der Ansprüche 1 bis 10, **dadurch gekennzeichnet, dass** in das Bodenteil (4) des Unterteils (3) Seitenwangenausnehmungen eingebracht sind, in die in der Geschlossen-Stellung des Gurtspanners (1) jeweils ein Abschnitt einer Seitenwange (7, 7.1) des Spannhebels (5) eintaucht.

12. Gurtspanner nach Anspruch 11, **dadurch gekennzeichnet, dass** in demjenigen Abschnitt der Seitenwange (2, 2.1), die in eine Seitenwangenausnehmung (17) des Bodenteils (4) eintaucht, eine Durchführungsöffnung eingebracht ist, die mit einer weiteren Durchführungsöffnung in der benachbarten Seitenwange (2, 2.1) des Unterteils (3) fluchtet.

13. Gurtspanner nach Anspruch 12, **dadurch gekennzeichnet, dass** der jeweils eine Durchführungsöffnung begrenzende Abschnitt einer Seitenwange des Spannhebels über dem übrigen, zum Unterteil weisenden Abschluss der jeweiligen Seitenwange hervorsteht.

14. Gurtspanner nach einem der Ansprüche 11 bis 13, **dadurch gekennzeichnet, dass** die Seitenwangenausnehmungen (17) des Bodenteils (4) nach Art jeweils eines Langloches mit einer Breite ausgeführt sind, die um das notwendige Spiel größer bemessen ist, als die Materialstärke des darin eintauchenden Seitenwangenabschnittes des Spannhebels (5).

15. Gurtspanner nach einem der Ansprüche bis 1 bis 14, **dadurch gekennzeichnet, dass** der Gurtspanner eine Einrichtung zum Verriegeln des Spannhebels (5) in seiner Geschlossen-Stellung an dem Unterteil (3) aufweist.

## Claims

1. Belt tensioner comprising a lower part (3) with a bottom part (4) enclosed by two side walls (2, 2.1) and comprising a tension lever (5) pivotably hinged to the side walls (2, 2.1) of the lower part (3) and having side walls (7, 7.1), with a deflection web (9) for passing around a belt (18) to be tensioned for forming a belt loop, wherein, when the belt tensioner (1) is closed, the deflection web (9) of the tension lever (5) is inclined with respect to the plane of the tension lever (5) in the direction of the pivot axis (S) of the tension lever (5), **characterised in that** the deflection web (9), inclined with respect to the outer plane of the tension lever (5), is moulded onto the side walls (7, 7.1) of the tension lever (5) by a cranked portion (14).

2. Belt tensioner according to claim 1, **characterised in that** the tension lever (5) is in an over dead centre position in its closed position when the belt (18) is tensioned.

3. Belt tensioner according to claim 1 or 2, **characterised in that** in the closed position of the belt tensioner (1), the plane forming the outer end of the tension lever (5) is arranged at an angle to the plane of the bottom part (4), such that the distance between the two planes decreases in the direction pointing away from the pivot axis (S) of the tension lever (5).

4. Belt tensioner according to claim 3, **characterised in that** the deflection web (9) of the tension lever (5) runs parallel or approximately parallel to the plane of the bottom part (4) in the closed position of the belt tensioner (1).

5. Belt tensioner according to one of claims 1 to 4, **characterised in that** the lower part (3) has a belt-deflection device and that a belt (18) guided over the upper edge of the deflection web (9) pointing to the pivot axis (S) of the tension lever (5) and an upper end of the belt deflection device of the lower part (3), the pivot axis (S) of the tension lever (5) is arranged at the side of the belt (18) pointing away from the bottom part (4).

6. Belt tensioner according to claim 5, **characterised in that** the upper end of the belt-deflection device of the lower part (3) is part of the free end of a deflection web (11) bent from the plane of the bottom part (4) between the side walls (2, 2.1).

7. Belt tensioner according to one of claims 5 or 6, **characterised in that** the belt-deflection device of the lower part (3) and the deflection web (9) of the tension lever (5) are arranged on different sides of the pivot axis (S) of the tension lever (5) with respect to the longitudinal extension of the belt tensioner (1).

8. Belt tensioner according to one of claims 1 to 7, **characterised in that** the deflection web (9) of the tension lever (5) is moulded onto the side walls (7, 7.1) of the tension lever (5) over its entire extension in a longitudinal direction of the belt tensioner (1).

9. Belt tensioner according to claim 8, **characterised in that** the tension lever (5) has reinforcement extensions (16) at the end of its deflection web (9) pointing to the pivot axis (S) in the area of the respective transition from deflection web (9) into the adjacent side wall (7, 7.1).

10. Belt tensioner according to one of claims 1 to 9, **characterised in that** the height of the belt tensioner (1) in its closed position is less than 20 mm, particularly approximately 19 mm or less.

11. Belt tensioner according to one of claims 1 to 10, **characterised in that** side wall recesses are inserted in the bottom part (4) of the lower part (3), in which, in the closed position of the belt tensioner (1), a section of a side wall (7, 7.1) of the tension lever (5) is respectively plunged.

12. Belt tensioner according to claim 11, **characterised in that** in the section of the side wall (2, 2.1) in which a side wall recess (17) of the bottom part (4) plunges, a passage opening is inserted, which is aligned with a further passage opening in the adjacent side wall (2, 2.1) of the lower part (3).

13. Belt tensioner according to claim 12, **characterised in that** the section of a side wall of the tension lever respectively delimiting a passage opening projects beyond the remaining end of the respective side wall pointing to the lower part.

14. Belt tensioner according to one of claims 11 to 13, **characterised in that** the side wall recesses (17) of the bottom part (4) are respectively designed in the manner of a long hole having a width which is sized larger by the required clearance than the material strength of the side wall section of the tension lever (5) plunging therein.

15. Belt tensioner according to one of claims 1 to 14, **characterised in that** the belt tensioner has a means for locking the tension lever (5) in its closed position at the lower part (3).

## Revendications

1. Tendeur de sangle comprenant une partie inférieure (3) avec une pièce de fond (4) bordée par deux parois latérales (2, 2.1) et comprenant un levier tendeur (5) présentant des parois latérales (7, 7.1) et guidé contre les parois latérales (2, 2.1) de la partie inférieure (3) qui lui permettent de pivoter, avec une plaque de renvoi (9) servant à renvoyer une sangle (18) à tendre pour la configurer en boucle, sachant que la plaque de renvoi (9) du levier tendeur (5), lorsque le tendeur de sangle (1) est fermé, est inclinée par rapport au plan du levier tendeur (5) en direction de l'axe de pivotement (S) du levier tendeur (5), **caractérisé en ce que** la plaque de renvoi (9) inclinée par rapport au plan extérieur du levier tendeur (5) est modelée par un coude (14) contre les parois latérales (7, 7.1) du levier tendeur (5).

2. Tendeur de sangle selon la revendication 1, **caractérisé en ce que** le levier tendeur (5) en position fermée et sangle tendue (18) se trouve sur une position située au-delà du point mort haut.

3. Tendeur de sangle selon la revendication 1 ou 2, **caractérisé en ce que** lorsque le tendeur de sangle (1) est en position fermée, le plan formant la terminaison extérieure du levier tendeur (5) est disposé selon un angle tel, par rapport au plan de la pièce de fond (4), que l'écart entre les deux plans va en diminuant en s'éloignant de l'axe de pivotement (S) du levier tendeur (5).

4. Tendeur de sangle selon la revendication 3, **caractérisé en ce que** lorsque le tendeur de sangle (1) est en position fermée, le plaque de renvoi (9) du levier tendeur (5) présente un tracé parallèle ou approximativement parallèle au plan de la pièce de fond (4).

5. Tendeur de sangle selon l'une des revendications 1 à 4, **caractérisé en ce que** la partie inférieure (3) présente un renvoi de sangle et qu'avec une sangle (18) guidée via l'arête supérieure de la plaque de renvoi (9) - arête qui regarde vers l'axe de pivotement (S) du levier tendeur (5) - et via une terminaison supérieure du renvoi de sangle que présente la partie inférieure (3), l'axe de pivotement (S) du levier tendeur (5) est disposé contre le côté de la sangle (18) qui s'éloigne de la pièce de fond (4).

6. Tendeur de sangle selon la revendication 5, **caractérisé en ce que** la terminaison supérieure du renvoi de sangle de la partie inférieure (3) fait partie de l'extrémité libre d'une plaque de renvoi (11) à bord relevé entre les parois latérales (2, 2.1), bord qui part du plan de la pièce de fond (4).

7. Tendeur de sangle selon l'une des revendications 5 ou 6, **caractérisé en ce que** le renvoi de sangle de la partie inférieure (3) et la plaque de renvoi (9) du levier tendeur (5) sont disposés sur des côtés différents de l'axe de pivotement (S) du levier tendeur (5) par rapport à l'étendue longitudinale du tendeur de sangle (1).

8. Tendeur de sangle selon l'une des revendications 1 à 7, **caractérisé en ce que** le plaque de renvoi (9) du levier tendeur (5) est modelée sur toute son étendue, dans le sens longitudinal du tendeur de sangle (1), contre les parois latérales (7, 7.1) du levier tendeur (5).

9. Tendeur de sangle selon la revendication 8, **caractérisé en ce que** le levier tendeur (5) présente - à l'extrémité de sa plaque de renvoi (9) regardant l'axe de pivotement (S), dans la zone de transition respective entre la plaque de renvoi (9) et la paroi latérale (7, 7.1) voisine - des appendices de renforcement (16).

10. Tendeur de sangle selon l'une des revendications 1 à 9, **caractérisé en ce que** la hauteur du tendeur de sangle (1) lorsqu'il se trouve en position fermée est inférieure à 20 mm, notamment 19 mm environ ou moins.

11. Tendeur de sangle selon l'une des revendications 1 à 10, **caractérisé en ce que** des évidements de paroi latérale ont été ménagés dans la pièce de fond (4) de la partie inférieure (3), évidements dans lesquels respectivement un segment d'une paroi latérale (7, 7.1) du levier tendeur (5) plonge lorsque le tendeur de sangle (1) se trouve en position fermée.

12. Tendeur de sangle selon la revendication 11, **caractérisé en ce que** dans le segment de la paroi latérale (2, 2.1) qui plonge dans un évidement (17) ménagé dans la paroi latérale de la pièce de fond (4), un orifice de passage a été ménagé, orifice qui est dans l'alignement d'un orifice de passage supplémentaire dans la paroi latérale voisine (2, 2.1) de la partie inférieure (3).

13. Tendeur de sangle selon la revendication 12, **caractérisé en ce que** le segment d'une paroi latérale du levier tendeur, segment qui limite respectivement un orifice de passage, fait saillie au-dessus de la terminaison restante - regardant vers la partie inférieure - de la paroi latérale respective.

14. Tendeur de sangle selon l'une des revendications 11 à 13, **caractérisé en ce que** les évidements (17) dans les parois latérales de la pièce de fond (4) sont réalisés chacun sous la forme d'un trou oblong d'une largeur dimensionnée plus grande, pour tenir compte du jeu nécessaire, que l'épaisseur du matériau constituant le segment de paroi latérale du levier tendeur (5) qui plonge dedans.

15. Tendeur de sangle selon l'une des revendications 1 à 14, **caractérisé en ce que** le tendeur de sangle présente contre la partie inférieure (3) un dispositif pour verrouiller le levier tendeur (5) sur sa position fermée.
